# EUROPÄISCHE PATENTSCHRIFT

(11) **EP 4 416 409 B1**
(45) Veröffentlichungstag und Bekanntmachung des Hinweises auf die Patenterteilung: **05.11.2025**
(21) Anmeldenummer: 22792764.7
(22) Anmeldetag: 28.09.2022
(51) Int. Cl.: F16H 19/04, F16H 19/06, F16H 55/06

(54) **LINEARANTRIEB**
LINEAR DRIVE
ENTRAÎNEMENT LINÉAIRE

(30) Priorität: 11.10.2021 DE 102021211441
(43) Veröffentlichungstag der Anmeldung: 21.08.2024
(73) Patentinhaber: ContiTech Deutschland GmbH, 30175 Hannover (DE)
(72) Erfinder: SCHÖFFER, Jannis, 30175 Hannover (DE); QUASS, Jan-Henning, 30175 Hannover (DE); KUCHARCZYK, Andre, 30175 Hannover (DE); WINKLER, Thomas, 30175 Hannover (DE)
(74) Vertreter: Preusser, Andrea
(86) Internationale Anmeldenummer: PCT/DE2022/200225
(87) Internationale Veröffentlichungsnummer: WO 2023/061537

(56) Entgegenhaltungen:
- DE-A1- 102010 015 901
- DE-C1- 3 433 363
- GB-A- 1 424 477
- US-A1- 2010 005 642

## Beschreibung

Die Erfindung betrifft einen Linearantrieb gemäß dem Oberbegriff des Anspruchs 1.

### Stand der Technik

Aus dem Stand der Technik sind Linearantriebe bekannt, die insbesondere und mit großer Häufigkeit im industriellen Maschinenbau zur Anwendung kommen. Die DE 10 2007 006 951 A1 offenbart eine beispielhafte Ausführungsform eines Linearantriebs.

GB 1 424 477 A zeigt ebenfalls ein Beispiel für einen Linearantrieb.

Eine beliebte Ausführungsform von Antriebssystemen für reversierende Linearbewegungen ist die Kombination zweier korrespondierender Antriebselemente, so dass das erste Antriebselement feststehend ist und sich das zweite Antriebselement mit dem ersten Antriebselement im Eingriff befindet sowie auf dem ersten Antriebselement linear entlang verfahrbar ist. Eine typische Kombination von Antriebselementen stellt eine Zahnstange in Verbindung mit einem Zahnrad dar. Das Zahnrad ist üblicherweise mit der Welle eines Antriebsmotors verbunden und stationär angeordnet. Abtriebsseitig befindet sich das Zahnrad im Eingriff mit einer Zahnstange eines linear beweglichen Schlittens, sodass die rotatorische Bewegung des Zahnrads auf die Zahnstange übertragen und hierdurch der Schlitten mittels der Zahnstange linear bzw. translatorisch verfahren werden kann.

Anders herum kann der Motor an den Schlitten angebunden sein. Der Motor steht auch in diesem Fall wie zuvor beschrieben über ein Zahnrad mit der Zahnstange in Verbindung, wobei die Zahnstange feststehend angeordnet ist. Der Schlitten verfügt somit über einen eigenen Antrieb, sodass der Schlitten durch die rotatorische Bewegung des Zahnrads linear entlang der feststehenden Zahnstange verfahren werden kann.

Es erweist sich dabei jedoch als problematisch, dass aufgrund von fertigungsbedingten Toleranzen Teilungsfehler zwischen den korrespondierenden Antriebselementen vorliegen können, wodurch es im Betrieb zu Eingriffsstörungen kommen kann. Aufgrund der starren Verzahnung der Antriebselemente aus meist metallischen Werkstoffen führen Teilungsfehler zu einem hohen Verschleiß der Verzahnung und damit verbunden zu einer starken Geräuschentwicklung.

Eine weitere mögliche Kombination von Antriebselementen stellt eine Linearantriebseinheit mit zwei sich im Eingriff befindlichen Antriebsriemen dar. Ein statischer Antriebsriemen ist offen und sich länglich erstreckend feststehend und unlösbar oder nur sehr schwierig lösbar mit einer Schiene, beispielsweise mit einer Aluminiumschiene, verbunden. Mit anderen Worten gesagt fungiert der statische Antriebsriemen als eine Zahnstange. Ein zweiter, relativ zum statischen Antriebsriemen beweglicher Antriebsriemen ist über eine Antriebswelle eines Motors bzw. ein an die Antriebswelle angebundenes Zahnrad und um weitere Umlenkrollen geführt. Die Antriebseinheit mit dem zweiten Antriebsriemen ist an einen beweglichen Schlitten angebunden, sodass der Schlitten linear entlang des statischen Antriebsriemens verfahren werden kann. Mit anderen Worten gesagt fungiert der bewegliche Antriebsriemen als ein Zahnrad. Auch dies kann umgekehrt erfolgen, wie zuvor anhand von Zahnrad und Zahnstange beschrieben.

Nachteiliger Weise kann der statische Antriebsriemen der Zahnstange bei Erreichen seiner Verschleißgrenze nicht oder nur sehr schwierig von der Schiene getrennt und separat ausgetauscht werden. Dies erhöht den Aufwand sowie die Kosten bei einem verschleißbedingten Wechsel des statischen Antriebsriemens, da die Schiene entweder gemeinsam mit dem Antriebsriemen gewechselt werden muss, was zu erhöhten Kosten führen kann, oder aber nur sehr mühevoll von dem zu wechselnden Antriebsriemen getrennt werden kann, was die Zeitdauer des Wechsels erhöhen und somit zu einem längeren Stillstand der Maschine bzw. Anlage führen kann.

Bekannte Anwendungen der oben beschriebenen Linearantriebe sind zum Beispiel die Förder- oder Lagertechnik bei Hub- oder Regalbediengeräten.

### Aufgabe

Der Erfindung liegt die Aufgabe zugrunde, einen Linearantrieb mit einem Antriebsriemen als Zahnstange bereitzustellen, welcher in der Lage ist, etwaige Teilungsfehler zwischen den miteinander korrespondierenden Antriebselementen auszugleichen. Vorzugsweise soll zusätzlich ein wartungsfreundlicher Aufbau des Linearantriebs realisiert werden, sodass ein einfacher und kostengünstiger Tausch von Verschleiß unterworfenen Komponenten erfolgen kann.

### Lösung der Aufgabe

Die Lösung dieser Aufgabe ergibt sich durch einen Linearantrieb mit den Merkmalen des Hauptanspruchs.

Weitere vorteilhafte Ausbildungen sind in den abhängigen Ansprüchen offenbart.

### Vorteile der Erfindung

Der in dem Anspruch 1 offenbarte Linearantrieb weist mindestens ein erstes Antriebselement mit in Längsrichtung einem ersten Ende und einem zweiten Ende auf. Das erste Antriebselement weist einen Grundkörper mit einer Rückenseite und mit einer der Rückenseite in einer vertikalen Richtung gegenüberliegenden Antriebsseite mit einer Vielzahl von Zähnen auf, wobei die Zähne quer zur Längsrichtung über eine Breite des ersten Antriebselementes ausgerichtet und in einer Zahnteilung in der Längsrichtung zueinander beabstandet sind.

Das erste Antriebselement weist eine Halterung auf, an welcher der Grundkörper des ersten Antriebselements mit seiner Rückenseite angeordnet ist. Die Halterung kann aus Metall, vorzugsweise aus Aluminium ausgebildet sein und ist ausgebildet, den Grundkörper zu versteifen.

Der Linearantrieb weist mindestens ein zweites, Zähne aufweisendes antreibbares Antriebselement auf, wobei mindestens ein Zahn des zweiten Antriebselementes in mindestens eine Zahnlücke des ersten Antriebselementes eingreift. Das zweite Antriebselement ist hierdurch auf dem ersten Antriebselement abwälzbar., wobei das erste Antriebselement zerstörungsfrei von der Halterung lösbar ist.

Der Linearantrieb ist dadurch gekennzeichnet, dass der Grundkörper sowie die Halterung mit mindestens einer Bügelschraube verbindbar sind, wobei die Bügelschraube zumindest teilweise einen Zahn des ersten Antriebselementes ersetzt oder der Grundkörper sowie die Halterung mit einem zwei Bänder aufweisenden Klettverschluss zusammenfügbar sind, wobei an dem Grundkörper auf der gegenüberliegenden Seite der Zähne und auf der dem Grundkörper zugeordneten Seite der Halterung jeweils ein Band des Klettverschlusses angeordnet ist.

Mit anderen Worten gesagt kann der Grundkörper des ersten Antriebselementes des erfindungsgemäßen Linearantriebs einen Zahnriemen aus polymerem Material aufweisen. Um den flexiblen Zahnriemen zu versteifen und um ein seitliches Auswandern des Zahnriemens verhindern zu können, wird auf der Rückenseite des Zahnriemens eine Halterung angeordnet. Der Zahnriemen und die Halterung können über eine lösbare Verbindung, beispielsweise über eine Klemmverbindung oder eine Klettverbindung miteinander verbunden sein. Es kann hierdurch eine lösbare Verbindung zwischen dem Grundkörper des ersten Antriebselementes und der Halterung bereitgestellt werden, was zum Beispiel den verschleißbedingten Wechsel des Grundkörpers ermöglichen kann, ohne die Halterung selbst ebenfalls austauschen zu müssen.

Der Grundkörper und die Zähne können ein polymeres Material aufweisen oder zumindest teilweise daraus bestehen. Durch das polymere Material des Grundkörpers und der Zähne können Schwingungen im Lineartrieb gedämpft und Geräusche reduziert werden. Als polymeres Material können verschiedene Elastomere auf Basis vulkanisierbarer Kautschukmischungen, umfassend wenigstens eine Kautschukkomponente (z.B. EPM, EPDM, HNBR, FKM) sowie Mischungsingredienzien, aber auch verschiedene Ausbildungen von Polyurethan zum Einsatz kommen. Polyurethan zeichnet sich insbesondere als Basismaterial von Zahnriemen als besonders verschleißfest und beständig gegenüber Fetten und Ölen aus und kann bevorzugt in besonders hoch beanspruchten Antrieben eingesetzt werden.

Der Linearantrieb kann als zweites Antriebselement zum Beispiel ein mit der Abtriebswelle eines Motors verbundenes Zahnrad aufweisen, das mit mindestens einem Zahn in eine Zahnlücke des ersten Antriebselementes eingreift. Der Motor und mit diesem fest in Verbindung stehende Bauteile können durch das antreibbare Zahnrad linear entlang des ersten Antriebselementes verfahren werden und beliebige Positionen entlang der Länge des ersten Antriebselementes anfahren. Durch das polymere Material des Grundkörpers und der Zähne des ersten Antriebselementes können auf besonders vorteilhafte Weise, insbesondere im Eingriff mit einem Zahnrad aus einem metallischen Werkstoff als zweites Antriebselement, Schwingungen im Lineartrieb gedämpft und Geräusche reduziert werden. Das zweite Antriebselement kann in einer weiteren Ausführungsform auch als Zahnriemen ausgebildet sein, welcher antreibbar und auf dem ersten Antriebselement abwälzbar ist. Es zeigt sich als besonders vorteilhaft, dass die Kraft über mehrere, sich im Eingriff befindliche Zähne übertragen werden kann, wodurch der Verschleiß des ersten und bzw. oder des zweiten Antriebselementes reduziert werden kann. Je nach Anwendungsfall kann der Linearantrieb das erste Antriebselement und bzw. oder das zweite Antriebselement in jeweils mehrfacher Ausführung aufweisen.

Gemäß einem weiteren Aspekt weist der Grundkörper auf der Antriebsseite auf der Oberfläche eine Textilauflage auf, wobei die Textilauflage das polymere Material auf vorteilhafte Weise vor Verschleiß schützt. Die Textilauflage kann aus einem Gewirke oder aus einem Gewebe von Kett- und Schussfäden ausgebildet sein und mit Zusätzen, zum Beispiel zur Verminderung des Reibbeiwertes, präpariert oder beschichtet sein.

Gemäß einem weiteren Aspekt sind in dem Grundkörper in Längsrichtung verlaufende Zugträger angeordnet und zumindest teilweise von dem polymeren Material umschlossen. Hierdurch kann dem flexiblen Grundkörper eine zusätzliche Steifigkeit in Längsrichtung verliehen werden. Auch können Zugkräfte von den Zugträgern in der Längsrichtung übertragen werden. Es kann eine Dehnung des Grundkörpers unter Last und eine daraus folgende Veränderung der Zahnteilung vermieden werden, was wiederum zu Störungen beim Zahneingriff des ersten Antriebselementes mit einem zweiten Antriebselement führen kann.

Gemäß der Erfindung sind der Grundkörper sowie die Halterung mit mindestens einer Bügelschraube verbindbar. Es kann hierdurch eine lösbare Verbindung zwischen dem Grundkörper des ersten Antriebselementes und der Halterung bereitgestellt werden, was zum Beispiel den verschleißbedingten Wechsel des Grundkörpers ermöglichen kann. Die Bügelschraube kann den Grundkörper beispielsweise durch Ausnehmungen in dem Grundkörper durchgreifen. In einer weiteren Ausbildung kann die Bügelschraube den Grundkörper an dessen Außenseiten umgreifen und mit der Halterung verklemmen.

Gemäß einem weiteren vorteilhaften Aspekt des erfindungsgemäßen Linearantriebs sind mehrere Bügelschrauben zueinander in Längsrichtung des ersten Antriebselementes beabstandet. Es kann so auch über große Längen eine ausreichende Fixierung des Grundkörpers des ersten Antriebselementes mit der Halterung gewährleistet werden.

Gemäß einem weiteren vorteilhaften Aspekt des erfindungsgemäßen Linearantriebs entspricht der Abstand der Bügelschrauben zueinander in Längsrichtung des ersten Antriebselementes der Hälfte der vorbestimmten Länge des sich mit dem zweiten Antriebselement im Eingriff befindlichen Längenabschnittes. Durch diesen Abstand kann die Anzahl der sich ggfs. mit dem zweiten Antriebselement in Kontakt befindlichen Bügelschrauben auf ein Minimum reduziert werden, wodurch der Verschleiß an dem zweiten Antriebselement reduziert werden kann. Da die Bügelschrauben nicht zur Leistungsübertragung zwischen dem ersten und dem zweiten Antriebselement dienen, wird durch den beschriebenen Abstand der Bügelschrauben zueinander die Leistungsübertragungsfähigkeit des Linearantriebs nur geringfügig eingeschränkt, während zugleich eine ausreichende Fixierung des Grundkörpers des ersten Antriebselementes mit der Halterung sichergestellt werden kann.

Gemäß einem weiteren vorteilhaften Aspekt des erfindungsgemäßen Linearantriebs entspricht der Abstand der Bügelschrauben in Längsrichtung des ersten Antriebselementes zueinander einem ganzzahligen Vielfachen der Zahnteilung des ersten Antriebselementes. Hierdurch kann sichergestellt werden, dass die Bügelschrauben gleichmäßig zueinander beabstandet sind.

Gemäß der Erfindung ersetzt die mindestens eine Bügelschraube zumindest teilweise einen Zahn des ersten Antriebselementes. Die Bügelschraube ist bevorzugt aus einem metallischen Werkstoff ausgebildet. Mit anderen Worten gesagt entspricht die Position der Bügelschraube der Position eines Zahnes. Der Zahn kann an der Position der Bügelschraube ausgespart oder nachträglich entfernt werden. Die Zugträger bleiben dabei weiterhin von dem polymeren Material des Grundkörpers umschlossen. Die Bügelschraube kann in dem Bereich des ausgelassenen Zahnes des ersten Antriebselementes in einer Ebene mit dem Zahnfußbereich der übrigen Zähne versenkt werden, sodass die Zähne des zweiten Antriebselementes mit einer möglichst geringen Fläche mit der Bügelschraube in Kontakt treten, wodurch der Verschleiß der Zähne des zweiten Antriebselementes minimiert werden kann. Als Zahnfußbereich ist der Bereich des Zahnes zu verstehen, in welchem der Zahn in den Grundkörper mündet.

Gemäß einem weiteren vorteilhaften Aspekt des erfindungsgemäßen Linearantriebs erstreckt sich jede Bügelschraube zumindest teilweise über die Breite des ersten Antriebselementes, wobei der Klemmbereich der Bügelschraube mindestens 2/3 der Zugträger umfasst. Hierdurch kann eine ausreichende Fixierung der Halterung mit dem Grundkörper des ersten Antriebselementes gewährleistet werden. Auf besonders bevorzugte Weise sind jeweils vier Bügelschrauben über die Breite des ersten Antriebselementes angeordnet.

Gemäß einem weiteren vorteilhaften Aspekt des erfindungsgemäßen Linearantriebs durchgreift die Bügelschraube den Grundkörper in mindestens einer sich von der Antriebsseite zur Rückenseite erstreckenden Ausnehmung. Mit anderen Worten gesagt wird die Bügelschraube durch mindestens eine Ausnehmung, beispielsweise in Form einer Bohrung, von der Antriebsseite zur Rückenseite durch den Grundkörper hindurchgeführt. Analog zum Grundkörper kann die Halterung Ausnehmungen gleicher Anzahl und Geometrie aufweisen, sodass die Bügelschraube neben dem Grundkörper auch die Halterung durchgreifen kann. Die Bügelschraube kann durch die Ausnehmungen in Längsrichtung und über die Breite in Querrichtung geführt werden. In Erstreckungsrichtung der Ausnehmung, also in vertikaler Richtung, senkrecht zur Längsrichtung und senkrecht zur Querrichtung, kann die Bügelschraube dahingehend fixiert werden, dass die Bügelschraube mit samt dem Grundkörper beispielsweise durch eine Mutter gegen die Halterung angezogen wird.

Gemäß einem weiteren vorteilhaften Aspekt des erfindungsgemäßen Linearantriebs ist die mindestens eine Ausnehmung zwischen zwei Zugträgern angeordnet. Der Grundkörper kann auf diese Weise trotz einer Ausnehmung seine Leistungsfähigkeit bzw. Zugfestigkeit beibehalten.

Gemäß der Erfindung sind der Grundkörper sowie die Halterung mit einem zwei Bänder aufweisenden Klettverschluss zusammenfügbar, wobei an dem Grundkörper auf der gegenüberliegenden Seite der Zähne und auf der dem Grundkörper zugeordneten Seite der Halterung jeweils ein Band des Klettverschlusses angeordnet ist.

Mit anderen Worten gesagt kann der Grundkörper des ersten Antriebselementes mit der Halterung über eine lösbare Verbindung in Form eines Klettverschlusses zusammengefügt werden. Der Klettverschluss weist zwei zusammenwirkende Bänder auf, wovon ein erstes Band Schlaufen aufweist und das zweite Band mit Widerhaken versehen ist, welche sich in den Schlaufen des ersten Bandes verhaken. Jeweils eines der Bänder ist der Halterung und dem Grundkörper zugeordnet und mit diesem verbunden. Es kann hierdurch eine lösbare Verbindung zwischen dem ersten Antriebselement und der Halterung bereitgestellt werden, was zum Beispiel den verschleißbedingten Wechsel des ersten Antriebselementes ermöglichen kann, ohne die Halterung selbst ebenfalls austauschen zu müssen.

Gemäß einem weiteren vorteilhaften Aspekt des erfindungsgemäßen Linearantriebs ist das jeweilige Band über eine Klebstoffschicht mit dem Grundkörper und bzw. oder der Halterung verbunden. Klebstoffe für verschiedene Materialkombinationen sind auf dem Markt in großer Anzahl erhältlich, sodass eine Verbindung der Bänder zwischen dem polymeren Material des Grundkörpers und der Halterung kostengünstig realisiert werden kann.

Gemäß einem weiteren vorteilhaften Aspekt des erfindungsgemäßen Linearantriebs ist das dem Grundkörper zugeordnete Band durch den Herstellungsprozesses des polymeren Grundkörpers stoffschlüssig mit dem Grundkörper verbunden. Das Band kann so zum Beispiel schon während des Extrusionsprozesses des ersten Antriebselementes in den Grundkörper eingelegt werden, sodass nach einer Abkühlung des polymeren Materials eine stoffschlüssige Verbindung zwischen Grundkörper und dem Band entstehen kann.

Gemäß einem weiteren vorteilhaften Aspekt des erfindungsgemäßen Linearantriebs ist das erste Antriebselement als ein Zahnriemen ausgebildet, wobei die Halterung ausgebildet ist, den Grundkörper zu versteifen.

Um den flexiblen Zahnriemen versteifen zu können und durch die Versteifung ein seitliches Auswandern des Zahnriemens verhindern zu können, wird auf der Rückenseite des Zahnriemens eine Halterung angeordnet. Bei der Verwendung eines Zahnriemens als Grundkörper des ersten Antriebselementes zeigt es sich als besonders vorteilhaft, dass Zahnriemen in beliebigen Längen verfügbar sind und insbesondere als Abschnitte vorbestimmter Länge besonders einfach an die Kundenbedürfnisse angepasst werden können, indem der Zahnriemen auf ein Vielfaches der Zahnteilung abgelängt wird.

### Erläuterung Figuren

Anhand der Zeichnungen wird im Folgenden ein Ausführungsbeispiel der Erfindung näher erläutert.
Fig. 1 zeigt einen erfindungsgemäßen Zahnriemen als Teil eines ersten Antriebselementes mit einer über einen Klettverschluss angebundenen Halterung in einer Schnittdarstellung.
Fig. 2 zeigt den Eingriff des ersten Antriebselementes und des zweiten Antriebselementes am Beispiel zweier Zahnriemen.
Fig. 3 zeigt eine Ausbildung eines Grundkörpers eines ersten Antriebselementes mit darin vorgesehenen Ausnehmungen.
Fig. 4 zeigt einen erfindungsgemäßen Zahnriemen als Teil eines ersten Antriebselementes mit einer über eine Bügelschraube angebundenen Halterung in einer Schnittdarstellung.

Die Beschreibung der o.g. Figuren erfolgt in kartesischen Koordinaten mit einer Längsrichtung L, einer zur Längsrichtung L senkrecht ausgerichteten Querrichtung B sowie einer sowohl zur Längsrichtung L als auch zur Querrichtung B senkrecht ausgerichteten vertikalen Richtung. Die Längsrichtung L kann auch als Tiefe L, die Querrichtung B auch als Breite B und die vertikale Richtung auch als Höhe bezeichnet werden. Die Längsrichtung L und die Querrichtung B bilden gemeinsam die Horizontale L, B, welche auch als horizontale Ebene L, B bezeichnet werden kann.

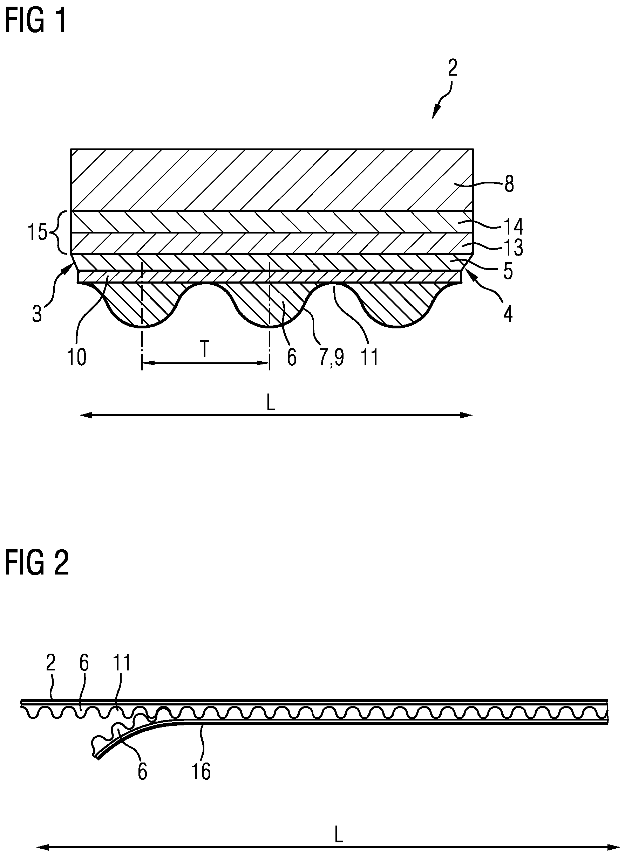

Fig. 1 zeigt einen Zahnriemen als Teil eines ersten Antriebselementes 2 mit einer über einen Klettverschluss 15 angebundenen Halterung 8. Die Halterung 8 kann als ein Metallprofil ausgebildet sein. Der Zahnriemen weist eine vorbestimmte Länge mit einem ersten Ende 3 und einem zweiten Ende 4 auf. Grundkörper 5 und Zähne 6 sind aus einem Polyurethan ausgebildet. In das Polyurethan des Grundkörpers 5 sind in Längsrichtung L des Zahnriemens parallel zueinander verlaufende Zugträger 10 aus Stahl eingebettet. Die mit den Zähnen 6 ausgebildete Seite des Zahnriemens, die mit einer Zahnteilung T zueinander gleichmäßig beabstandet sind, kann auch als Antriebsseite 7 bezeichnet werden. Zum Schutz des Grundkörpers 5 und der Zähne 6 vor Verschleiß ist die Antriebsseite 7 mit einer Textilauflage 9 beschichtet. Über die Textilauflage kann in Kombination mit weiteren Präparationen, wie z.B. einer Beschichtung aus Teflon, der Reibbeiwert der Antriebsseite 7 des Antriebsriemens eingestellt werden. Zur Versteifung des flexiblen Antriebsriemens ist auf der der Antriebsseite 7 gegenüberliegenden Seite eine Halterung 8 angeordnet, das über den Klettverschluss 15 mit dem Grundkörper 5 des Antriebsriemens verbunden ist. Der Klettverschluss 15 weist ein dem Grundkörper 5 zugeordnetes Band 13 und ein der Halterung 8 zugeordnetes Band 14 auf. Die Bänder 13 und 14 bilden in Zusammenwirken den Klettverschluss 15, indem sich die Haken eines der Bänder 13, 14 mit den Schlaufen eines der Bänder 13, 14 verbinden. Die Klettverbindung ist lösbar, sodass bei Verschleiß des Grundkörpers 5 ein einfacher Austausch ohne eine erforderliche Erneuerung der Halterung 8 erfolgen kann. Der Grundkörper 5 bildet zusammen mit der daran angebundenen Halterung 8 ein erstes Antriebselement 2, welches in Zusammenwirken mit einem weiteren Antriebselement Teil eines Linearantriebs ist.

Fig. 2 zeigt den Eingriff des ersten Antriebselementes 2 und des zweiten Antriebselementes 16 am Beispiel zweier Zahnriemen. Die Antriebselemente 2, 16 sind Teil eines Linearantriebs. Das erste Antriebselement 2 ist dabei zum Beispiel ortsfest an einem Maschinengestell angebunden, während das zweite, über einen Motor antreibbare Antriebselement 16 mit den Zähnen 6 in die Zahnlücken 11 des ersten Antriebselementes 2 eingreift. Das zweite Antriebselement 16 kann sich auf dem ersten Antriebselement 2 abwälzen und ist so linear in Längsrichtung L entlang des ersten Antriebselementes 2 verfahrbar. Durch den gleichzeitigen Eingriff mehrerer Zähne 6 des ersten und des zweiten Antriebselementes 2, 16 werden lokale Spannungsspitzen vermieden, da die Kraft gleichmäßig über eine Vielzahl von Zähnen übertragen wird.

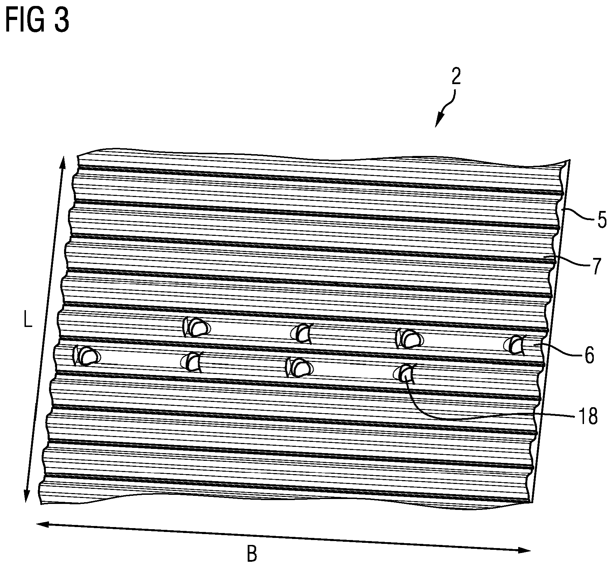

Fig. 3 zeigt den Grundkörper 5 des ersten Antriebselementes 2 mit der Länge L und einer Breite B. Der elastomere Grundkörper 5 weist mehrere Ausnehmungen 18 auf. Zwischen jeweils zwei Ausnehmungen 18, welche über die Breite B jeweils eines Zahnes 6 angeordnet sind und ein gemeinsames Paar von Ausnehmungen 18 bilden, ist der jeweilige Zahn 6 entfernt. Das elastomere Material ist dabei so weit entfernt, dass lediglich eine dünne Schicht des elastomeren Materials zum Schutz der darunterliegenden Zugträger verbleibt. Die Ausnehmungen 18 erstrecken sich in vertikaler Richtung von der Antriebsseite 7 durch den Grundkörper 5 hindurch bis zur Rückenseite und sind als Löcher ausgebildet, welche zum Beispiel durch Bohren oder Stanzen gebildet werden können. Die Ausnehmungen 18 verlaufen in einem Bereich zwischen zwei Zugträgern, sodass die Zugträger nicht beschädigt werden und weiterhin uneingeschränkt Zugkräfte übertragen können. Zu den beschriebenen Ausnehmungen 18 sind in Längsichtung L versetzt über die Breite B eines benachbarten Zahnes 6 weitere Ausnehmungen 18 vorgesehen, wobei jeweils zwei Ausnehmungen 18 ein gemeinsames Paar von Ausnehmungen 18 bilden. Das jeweilige Paar von Ausnehmungen 18 ist über die Breite B zu dem Paar von Ausnehmungen 18 des benachbarten Zahnes 6 um den Abstand der zu einem jeweiligen Paar zugeordneten Ausnehmungen 18 zueinander nach links oder rechts verschoben.

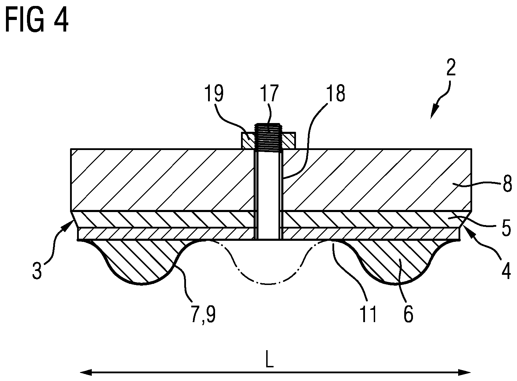

Fig. 4 zeigt einen Zahnriemen als Teil eines ersten Antriebselementes 2 mit einer über eine Bügelschraube 17 angebundenen Halterung 8 in einer Schnittdarstellung. Der Zahnriemen weist eine vorbestimmte Länge mit einem ersten Ende 3 und einem zweiten Ende 4 auf. Grundkörper 5 und Zähne 6 sind aus einem Polyurethan ausgebildet. In das Polyurethan des Grundkörpers 5 sind in Längsrichtung L des Zahnriemens parallel zueinander verlaufende Zugträger aus Stahl eingebettet. Die mit den Zähnen 6 ausgebildete Seite des Zahnriemens, die mit einer Zahnteilung T zueinander gleichmäßig beabstandet sind, kann auch als Antriebsseite 7 bezeichnet werden. Zum Schutz des Grundkörpers 5 und der Zähne 6 vor Verschleiß ist die Antriebsseite 7 mit einer Textilauflage 9 beschichtet. Über die Textilauflage kann in Kombination mit weiteren Präparationen, wie z.B. einer Beschichtung aus Teflon, der Reibbeiwert der Antriebsseite 7 des Antriebsriemens eingestellt werden. Zur Versteifung des flexiblen Antriebsriemens ist auf der der Antriebsseite 7 gegenüberliegenden Seite eine Halterung 8 angeordnet, das über eine Bügelschraube 17 und eine Mutter 19 mit dem Grundkörper 5 des Antriebsriemens verbunden ist. Die Bügelschraube 17 wird zur Ausbildung einer Klemmverbindung zwischen Grundkörper 5 und Halterung 8 durch die Ausnehmung 18 des Grundkörpers 5 und der Halterung 8 von der Antriebsseite 7 aus in vertikaler Richtung hindurchgeführt. Die Ausnehmung 18 verläuft zwischen zwei in Längsrichtung L verlaufenden, benachbarten Zugträgern. Antriebsseitig 7 ist die Bügelschraube 17 so in der Ausnehmung 18 platziert, dass die Bügelschraube nicht aus der Zahnlücke 11 des Grundkörpers 5 herausragt. Ein aus der Halterung 8 herausragender Teil der Bügelschraube 17 ist mit einem Außengewinde versehen, sodass die Bügelschraube 17 mit einer Mutter 19 gegen die Halterung 8 angezogen werden kann, sodass zwischen Grundkörper 5 und Halterung 8 eine Klemmverbindung entsteht. Die Klemmverbindung ist lösbar, sodass bei Verschleiß des Grundkörpers 5 ein einfacher Austausch ohne eine erforderliche Erneuerung der Halterung 8 erfolgen kann. Der Grundkörper 5 bildet zusammen mit der daran angebundenen Halterung 8 ein erstes Antriebselement 2, welches in Zusammenwirken mit einem weiteren Antriebselement Teil eines Linearantriebs ist.

### Bezugszeichenliste (Teil der Beschreibung)

- 2: Erstes Antriebselement
- 3: Erstes Ende
- 4: Zweites Ende
- 5: Grundkörper
- 6: Zahn
- 7: Antriebsseite
- 8: Halterung
- 9: Textilauflage
- 10: Zugträger
- 11: Zahnlücke
- 13: Dem Grundkörper zugeordnetes Band
- 14: Der Halterung zugeordnetes Band
- 15: Klettverschluss
- 16: Zweites Antriebselement
- 17: Bügelschraube
- 18: Ausnehmung
- 19: Mutter

- B: Breite / Querrichtung
- L: Längsrichtung
- T: Zahnteilung

## Patentansprüche

1. Linearantrieb,
aufweisend mindestens ein erstes Antriebselement (2) mit in Längsrichtung (L) einem ersten Ende (3) und einem zweiten Ende (4),
wobei das erste Antriebselement (2) einen Grundkörper (5) mit einer Rückenseite und mit einer in einer vertikalen Richtung gegenüberliegenden Antriebsseite (7) mit einer Vielzahl von Zähnen (6) aufweist,
wobei die Zähne (6) über eine Breite (B) des ersten Antriebselementes (2) ausgerichtet sind,
wobei die Zähne (6) in einer Zahnteilung (T) in der Längsrichtung (L) zueinander beabstandet sind,
wobei das erste Antriebselement (2) eine Halterung (8) aufweist, an welcher der Grundkörper (5) des ersten Antriebselements (2) mit seiner Rückenseite angeordnet ist,
wobei der Linearantrieb mindestens ein zweites, Zähne (6) aufweisendes antreibbares Antriebselement (16) aufweist,
wobei mindestens ein Zahn (6) des zweiten Antriebselementes (16) in mindestens eine Zahnlücke (11) des ersten Antriebselementes (2) eingreift, wodurch das zweite Antriebselement (16) auf dem ersten Antriebselement (2) abwälzbar ist,
wobei das erste Antriebselement (2) zerstörungsfrei von der Halterung (8) lösbar ist,
**dadurch gekennzeichnet, dass**
der Grundkörper (5) sowie die Halterung (8) mit mindestens einer Bügelschraube (17) verbindbar sind, wobei die Bügelschraube (17) zumindest teilweise einen Zahn (6) des ersten Antriebselementes (2) ersetzt oder der Grundkörper (5) sowie die Halterung (8) mit einem zwei Bänder (13, 14) aufweisenden Klettverschluss (15) zusammenfügbar sind, wobei an dem Grundkörper (5) auf der gegenüberliegenden Seite der Zähne (6) und auf der dem Grundkörper (5) zugeordneten Seite der Halterung (8) jeweils ein Band (13, 14) des Klettverschlusses (15) angeordnet ist.

2. Linearantrieb nach Anspruch 1,
**dadurch gekennzeichnet, dass**
der Grundkörper (5) auf der Antriebsseite (7) auf der Oberfläche eine Textilauflage (9) aufweist,
wobei die Textilauflage (9) ein polymeres Material vor Verschleiß schützt.

3. Linearantrieb nach einem der vorhergehenden Ansprüche,
**dadurch gekennzeichnet, dass**
im Grundkörper (5) in Längsrichtung (L) verlaufende Zugträger (10) angeordnet sind und zumindest teilweise von dem polymeren Material umschlossen sind,

4. Linearantrieb nach einem der vorhergehenden Ansprüche,
**dadurch gekennzeichnet, dass**
mehrere Bügelschrauben (17) zueinander in Längsrichtung (L) des ersten Antriebselementes (2) beabstandet sind.

5. Linearantrieb nach einem der vorhergehenden Ansprüche,
**dadurch gekennzeichnet, dass**
der Abstand der Bügelschrauben (17) zueinander in Längsrichtung (L) des ersten Antriebselementes (2) der Hälfte der vorbestimmten Länge des sich mit dem zweiten Antriebselement (16) im Eingriff befindlichen Längenabschnittes entspricht.

6. Linearantrieb nach einem der vorhergehenden Ansprüche,
**dadurch gekennzeichnet, dass**
der Abstand der Bügelschrauben (17) in Längsrichtung (L) des ersten Antriebselementes (2) zueinander einem ganzzahligen Vielfachen der Zahnteilung (T) des ersten Antriebselementes (2) entspricht.

7. Linearantrieb nach einem der vorhergehenden Ansprüche,
**dadurch gekennzeichnet, dass**
sich jede Bügelschraube (17) zumindest teilweise über die Breite (B) des ersten Antriebselementes (2) erstreckt,
wobei der Klemmbereich der Bügelschraube (17) mindestens 2/3 der Zugträger (10) umfasst.

8. Linearantrieb nach einem der vorhergehenden Ansprüche,
**dadurch gekennzeichnet, dass**
die Bügelschraube (17) den Grundkörper (5) in mindestens einer sich von der Antriebsseite (7) zur Rückenseite erstreckenden Ausnehmung (18) durchgreift.

9. Linearantrieb nach einem der vorhergehenden Ansprüche,
**dadurch gekennzeichnet, dass**
die mindestens eine Ausnehmung (18) zwischen zwei Zugträgern (10) angeordnet ist.

10. Linearantrieb nach einem der Ansprüche 1 bis 3,
**dadurch gekennzeichnet, dass**
das jeweilige Band (13, 14) über eine Klebstoffschicht mit dem Grundkörper (5) und / oder der Halterung (8) verbunden ist.

11. Linearantrieb nach Anspruch 10,
**dadurch gekennzeichnet, dass**
das dem Grundkörper (5) zugeordnete Band (13) durch den Herstellungsprozesses des polymeren Grundkörpers (5) stoffschlüssig mit dem Grundkörper (5) verbunden ist.

## Claims

1. Linear actuator,comprising at least one first drive member (2) having a first end (3) and a second end (4) in the longitudinal direction (L),
wherein the first drive member (2) has a base body (5) with a back side and with a drive side (7) opposite in a vertical direction with a plurality of teeth (6),
wherein the teeth (6) are aligned over a width (W) of the first drive member (2),wherein the teeth (6) are spaced out to each other in a tooth pitch (T) in the longitudinal direction (L), wherein the first drive element (2) has a bracket (8) on which the base body (5) of the first drive element (2) is arranged with its back side, wherein
the linear drive has at least a second, has teeth (6), wherein
at least one tooth (6) of the second drive element (16) engages in at least one tooth gap (11) of the first drive element (2), whereby the second drive element (16) can be rolled on the first drive element (2),
wherein the first drive element (2) can be detached from the bracket (8) in a non-destructive manner, **characterized in that**
the base body (5) as well as the bracket (8) can be connected with at least one U-bolt screw (17), wherein the U-bolt (17) replaces at least partially one tooth (6) of the first drive element (2) or the base body (5) and the bracket (8) can be joined together with a Velcro fastener (15) comprising two straps (13, 14), whereby on the base body (5) on the opposite side of the teeth (6) and on the side of the bracket (8) assigned to the base body (5) each a band (13, 14) of the Velcro fastener (15).

2. Linear actuator according to claim 1, **characterized in that**
the base body (5) on the drive side (7) has a textile coating (9) on the surface, wherein the textile coating (9) protects a polymer material from wear.

3. Linear actuator according to one of the preceding claims,
**characterized in that** in the base body (5) tension members (10) are arranged in the longitudinal direction (L) and are at least partially enclosed by the polymer material,

4. Linear actuator according to any of the preceding claims, **characterized in that**
several U-bolts (17) are spaced from each other in the longitudinal direction (L) of the first drive element (2).

5. Linear actuator according to any of the preceding claims,
**characterized in that** the distance of the U-bolts (17) to each other in the longitudinal direction (L) of the first drive member (2) corresponds to half of the predetermined length of the length portion engaged with the second drive member (16).

6. Linear actuator according to one of the preceding claims, **characterized in that**
the distance of the U-bolts (17) in the longitudinal direction (L) of the first drive member (2) to each other corresponds to an integer multiple of the tooth pitch (T) of the first drive element (2).

7. Linear actuator according to any of the preceding claims, **characterized**
**in that** each U-bolt (17) extends at least partially over the width (B) of the first drive member (2), wherein the clamping area of the U-bolt (17) comprises at least 2/3 of the tension members (10).

8. Linear actuator according to one of the preceding claims,
**characterized in that**
the U-bolt (17) engages the base body (5) in at least one recess (18) extending from the drive side (7) to the back side.

9. Linear actuator according to any of the preceding claims,
**characterized in that**
at least one recess (18) is arranged between two tension members (10).

10. Linear actuator according to any one of claims 1 to 3, **characterized in that**
the respective tape (13, 14) is connected to the base body (5) and/or the bracket (8) via an adhesive layer.

11. Linear actuator according to claim 10,
**characterized in that** the strip (13) assigned to the base body (5) is materially bonded to the base body (5) by the manufacturing process of the polymer base body (5).

## Revendications

1. Actionneur linéaire, comprenant au moins un premier élément d'entraînement (2) ayant une première extrémité (3) et une seconde extrémité (4) dans le sens longitudinal (L),
dans lequel le premier élément d'entraînement (2) a un corps de base (5) avec une face arrière et avec un côté d'entraînement (7) opposé dans une direction verticale avec une pluralité de dents (6),
dans lequel les dents (6) sont alignées sur une largeur (W) du premier élément d'entraînement (2),dans lequel les dents (6) sont espacées les unes par rapport aux autres dans un pas de dent (T) dans le sens longitudinal (L)
dans lequel le premier élément d'entraînement (2) a un support (8) sur lequel le corps de base (5) du premier élément d'entraînement (2) est disposé avec sa face arrière,dans lequel l'entraînement linéaire a au moins une seconde, a des dents (6), dans lesquelles au moins une dent (6) du second élément d'entraînement (16) s'engage dans au moins un espace de dent (11) du premier élément d'entraînement (2), de sorte que le deuxième élément d'entraînement (16) peut être roulé sur le premier élément d'entraînement (2), dans lequel le premier élément d'entraînement (2) peut être détaché du support (8) d'une manière non destructive, **caractérisée en ce que**
le corps de base (5) ainsi que le support (8) peuvent être reliés par au moins une vis de boulon en U (17), dans laquelle le boulon en U (17) remplace au moins partiellement une dent (6) du premier élément d'entraînement (2) ou du corps de base (5) et le support (8) peut être assemblé avec une fermeture velcro (15) comprenant deux sangles (13, 14), dans laquelle sur le corps de base (5) sur le côté opposé des dents (6) et sur le côté du support (8) assigné au corps de base (5) chacun un bande (13, 14) de la fermeture velcro (15).

2. Actionneur linéaire selon la revendication 1, **caractérisé**
**en ce que** le corps de base (5) du côté de l'entraînement (7) présente un revêtement textile (9) sur la surface, dans lequel le revêtement textile (9) protège un matériau polymère de l'usure.

3. Actionneur linéaire selon l'une des revendications précédentes,
**caractérisé en ce que** dans le corps de base (5) des éléments de tension (10) sont disposés dans le sens longitudinal (L) et sont au moins partiellement entourés par le matériau polymère,

4. Actionneur linéaire selon l'une quelconque des revendications précédentes , **caractérisé en ce que**
plusieurs boulons en U (17) sont espacés les uns des autres dans le sens longitudinal (L) du premier élément d'entraînement (2).

5. Actionneur linéaire selon l'une quelconque des revendications précédentes,
**caractérisé en ce que** la distance des boulons en U (17) les uns par rapport aux autres dans le sens longitudinal (L) du premier élément d'entraînement (2) correspond à la moitié de la longueur prédéterminée de la partie de longueur engagée avec le second élément d'entraînement (16).

6. Actionneur linéaire selon l'une des revendications précédentes,
**caractérisé en ce que**
la distance des boulons en U (17) dans le sens longitudinal (L) du premier élément d'entraînement (2) les uns par rapport aux autres correspond à un multiple entier du pas de dent (T) du premier élément d'entraînement (2).

7. Actionneur linéaire selon l'une quelconque des revendications précédentes, **caractérisé en ce que**
chaque boulon en U (17) s'étend au moins partiellement sur la largeur (B) du premier élément d'entraînement (2),
la zone de serrage du boulon en U (17) comprenant au moins 2/3 des éléments de tension (10).

8. Actionneur linéaire selon l'une des revendications précédentes,
**caractérisé en ce que**
le boulon en U (17) s'engage dans le corps de base (5) dans au moins un évidement (18) s'étendant du côté entraînement (7) vers la face arrière.

9. Actionneur linéaire selon l'une quelconque des revendications précédentes,
**caractérisé en ce qu'**
au moins un évidement (18) est disposé entre deux organes de tension (10).

10. Actionneur linéaire selon l'une quelconque des revendications 1 à 3, **caractérisé en ce que**
le ruban respectif (13, 14) est relié au corps de base (5) et/ou au support (8) par une couche adhésive.

11. Actionneur linéaire selon la revendication 10, **caractérisé en ce que**
la bande (13) affectée au corps de base (5) est matériellement liée au corps de base (5) par le procédé de fabrication du corps de base en polymère (5).
